# EUROPEAN PATENT APPLICATION

(11) **EP 4 056 256 A1**
(43) Date of publication of application: **14.09.2022**
(21) Application number: 21218105.1
(22) Date of filing: 29.12.2021
(51) Int. Cl.: B01D 53/26, B01D 53/00

(54) **CONDENSATION DEVICE FOR COMPRESSED AIR**

(30) Priority: 11.03.2021 JP 2021039165; 21.06.2021 JP 2021102238
(71) Applicant: Japan Air Dryer Sale Co., Ltd., Yoshinogawa-shi, Tokushima 776-0013 (JP)
(72) Inventor: Kawamata, Hiroyasu, Yoshinogawa-shi, 776-0013 (JP)
(74) Representative: Frey, Sven Holger

(57) **Abstract**

**[Problem]**

To provide a condensation device for compressed air which can be made smaller and lighter, can also be easily made at a low cost by connecting a plurality of condensation units, simplifying the structure, and reducing the number of parts, and which can improve a condensation action and an adiabatic expansion action by the condensation units.

**[Means for Solving the Problems]**

A plurality of hollow condensation units 6 are coaxially connected.

Compressed air is caused to move in sequence from the upstream side condensation units 6 into the downstream side condensation units 6 to be dehumidified.

Dehumidified compressed air can be supplied to a downstream side air tool 24.

Collision plates 15, 16 capable of colliding with compressed air are provided inside each condensation unit 6.

Compressed air is provided to be condensable and dehumidified compressed air is provided to be capable of moving in sequence into the downstream side condensation units 6.

## Description

### [Technical Field]

The present invention relates to a condensation device for compressed air which can be made smaller and lighter, can also be easily made at a low cost by connecting a plurality of condensation units, simplifying the structure, and reducing the number of parts, and can improve a condensation action and an adiabatic expansion action by the condensation units.

### [Background of the Invention]

Compressed air discharged from an air compressor contains condensed water and an oil content. When this compressed air is supplied to an air tool such as an air driver and an impact wrench, there is a possibility that the inside of an air conduit rusts or components inside the air tool rust to deteriorate a function and to cause malfunction. Accordingly, an air dryer is attached to a compressed air supply conduit to remove a water content and the dehumidified and dried compressed air is supplied to the air tool.

For example, there is a device in which an upper cover is attached to an upper portion of a hollow cylindrical body, a partition tube of a hollow cylindrical shape is attached to the inside of the hollow cylindrical body, a plurality of partition structures of a substantially conical shape are vertically stacked inside the partition tube and are connected to an air guide member through a long bolt, wherein the upper portion inside each partition structure is formed with a recessed space and a through-hole, compressed air is introduced into the hollow cylindrical body from the upper cover and is caused to move to the upper partition structure from the lower partition structure to jet into the upper recessed space from the through-hole, thereby adiabatically expanding the compressed air to remove the water content (e.g., refer to Patent Document 1).

However, according to the device stated above, since the partition tube is disposed inside the hollow cylindrical body, the plurality of deformed partition structures are stacked inside the partition tube, and each partition structure is formed with a through-hole of a small hole shape, there were problems that the number of parts was large and the manufacture was complicated and difficult because the partition structure requires formation of the recessed space and the through-hole of the small hole shape. Further, since, after introduction of the compressed air into the hollow cylindrical body, it is caused to move into the partition tube and the partition structure, there was a problem that the hollow cylindrical body and the partition tube were required to have a large diameter and were made large size. Still further, since the partition structure is fixed by the through bolt, there was a problem that the number of the partition structures was constrained by the length of the through bolt, a condensation capacity of the compressed air was limited, and the water content could not be fully removed.

As a prior art to solve such problems, there is a gas-liquid separation device which is inserted in a compressed air supply conduit. In this device, a cylindrical container connected to a lid body is provided, a cylindrical partition body is provided inside the cylindrical container, a body portion is disposed inside the partition body, and a plurality of flange portions are provided on the peripheral surface of the body portion. One of the flange portions is provided with a gas flow control small hole portion adapted to communicate with a negative pressure hollow chamber, wherein compressed air introduced into the body portion is caused to move into the negative pressure hollow chamber from the control small hole portion to separate gas and liquid (e.g., refer to Patent Document 2).

However, the gas-liquid separation device has a complicated structure, and its manufacture is difficult, and moreover, in one or more control small hole portions, it was not possible to fully dehumidify and dry the compressed air because a separation efficiency of gas and liquid is low.

Under these circumstances, the applicant developed a condensation device for compressed air and has already proposed it. According to this condensation device, one or more condensation units are disposed at a compressed air moving pass and the condensation unit is provided therein with a collision plate for causing the compressed air to collide therewith and a narrow passage for jetting the compressed air, wherein the compressed air jetted into a condensation tube is forced into a closed compression passage, the pushed-back compressed air is caused to collide with the other side of the collision plate, thereby repeatedly condensing and adiabatically expanding the compressed air by the collision plate, the narrow passage, the compression passage and the other side of the collision plate. After separating gas and liquid, the compressed air moves to an outlet tube to be introduced into the adjacent downstream side condensation unit, hereby efficiently dehumidifying and drying the compressed air (e.g., refer to Patent Document 3).

However, this already proposed condensation device for compressed air had a problem that a sufficient gas-liquid separation effect could not be obtained. According to this condensation device for compressed air, after collision of the compressed air with the collision plate when introduced, since the compressed air is caused to move into an annular passage of the outer periphery of the collision plate to jet into a condensation tube, a sufficient effect cannot be obtained in the condensation of the compressed air by collision. Moreover, a desired effect cannot be obtained even in the condensation of the compressed air in the case where the pushed-back compressed air is caused to collide with the other side of the collision plate and as a result, there was a problem that a sufficient gas-liquid separation effect could not be obtained.

To solve this problem, the applicant developed an improved condensation device for compressed air and has already proposed it. According to this condensation device, a vent plate and a collision plate, each formed with a lot of vent holes, are adjacently disposed on the upstream side inside each condensation unit constituting the condensation tube, and after the compressed air is caused to collide with the vent plate to be condensed, it is caused to jet from the lot of vent holes to precisely perform adiabatic expansion, thereby improving a dehumidification or drying effect of the compressed air.

However, in this already proposed condensation device for compressed air, there was a problem that the inner structure of the condensation tube and each condensation unit became complicated, and the disposition of the vent plate and the collision plate became complicated to make the manufacture difficult and expensive.

### [Prior Art Documents]

### [Patent Document]

[Patent Document 1] Japanese Published Unexamined Application No. H10-235132
[Patent Document 2] Japanese Patent No. 5467180
[Patent Document 3] Japanese Published Unexamined Application No. 2020-151650

### [Summary of the Invention]

### [Problems to be Solved by the Invention]

It is therefore an object of the present invention to solve these problems and to provide a condensation device for compressed air which can be made smaller and lighter, can be easily made at a low cost, and can improve a condensation action and an adiabatic expansion action by a condensation unit, by connecting a plurality of condensation units, simplifying the structure, and reducing the number of parts.

### [Means for Solving the Problem]

According to the invention of claim 1, a condensation device for compressed air is provided, in which a plurality of hollow condensation units are coaxially connected and compressed air is caused to move in sequence from the upstream side condensation units into the downstream side condensation units to be dehumidified and can be supplied to a downstream side air tool, characterized in that a collision plate capable of colliding with the compressed air is provided inside each condensation unit to enable the compressed air to condense, and the dehumidified compressed air is provided to be capable of moving in sequence into the downstream side condensation unit. By simplifying the structure and reducing the number of parts, the condensation device can be made smaller and lighter and can be easily made at a low cost. It is also possible to improve a dehumidification capacity and to prevent decrease in function or malfunction of the air tool by a condensation action in the condensation units.

According to the invention of claim 2, the collision plate is formed with a lot of vent holes through which compressed air is jetted to be adiabatically expandable, thereby improving a dehumidification capacity by the condensation units.

According to the invention of claim 3, a plurality of collision plates are disposed away from each other inside the condensation unit to cause the phases of vent holes of the collision plates to be shifted from each other, thereby improving collision accuracy of compressed air by the collision plate and improving condensation accuracy.

According to the invention of claim 4, one or more joint tubes are disposed at the middle part of the condensation unit and one or more collision plates formed with vent holes are disposed away from each other inside the joint tubes. By making the structure of the condensation unit simple and reasonable, the condensation device can be easily made at a low cost, thereby improving a dehumidification effect by activating the condensation and adiabatic expansion action of the compressed air.

According to the invention of claim 5, the collision plate is adhered and attached to the inside of the joint tube by adopting an attachment method using an adhesive in place of the attachment by conventional welding, thereby safely and easily making the condensation device at a low cost by dissolving the troublesome and complicated labor.

According to the invention of claim 6, the joint tube is constituted to be capable of increasing or decreasing the length thereof according to the number of collision plates disposed inside the joint tube, while the collision plate is attached to the inside of the joint tube to be capable of increasing or decreasing the number thereof. With this arrangement, the joint tube can be freely constituted according to the number of collision plate disposed inside the joint tube, a degree of freedom in the constitution and design of the joint tube can be obtained, and the collision plate can be reasonably attached according to the action of the condensation unit.

According to the invention of claim 7, a longitudinal cross section of the middle part of the condensation unit is formed into a substantially hollow ellipsoid body and a tube internal area becomes large as compared to a straight-tube shaped condensation unit. By increasing the area of the collision plate disposed inside the joint tube and increasing the number of the vent holes, a collision effect of the compressed air and an adiabatic expansion effect by jetting of the compressed air from the vent holes improve, thereby improving the dehumidification or drying action of the compressed air.

According to the invention of claim 8, a connecting tube formed with a screw portion is connected to both sides in the major axis direction of the condensation unit to facilitate the connection of the condensation unit.

According to the invention of claim 9, the condensation unit is fixed by joining end edges of a pair of condensation housings formed into a bowl shape to easily realize the manufacture of a deformed condensation unit at a low cost.

According to the invention of claim 10, the collision plates formed with a plurality of vent holes are disposed opposite to each other on the inner surface of the condensation housings to realize a simple structure by the combination of the condensation housings and the collision plates.

According to the invention of claim 11, the condensation housing is formed at its bow bottom portion with a connecting hole to which the connecting tube is connected to easily realize the connection of the connecting tube to the condensation housing.

According to the invention of claim 12, a female screw portion is formed on the inner surface of one connecting tube, while a male screw portion is formed on the outer surface of the other connecting tube, and the connecting tubes of the adjacent condensation units are threaded to these screw portions to enable the adjacent condensation units to connect, thereby facilitating the connection of the condensation units by the connection of the connecting tube with the screw portions.

According to the invention of claim 13, the male screw portion of the connecting tube is formed into a tapered screw to stabilize a flow of compressed air by suppressing an inner diameter difference of the connecting part of the connecting tube.

According to the invention of claim 14, the plurality of condensation units are vertically disposed to make installation areas of the condensation units compact. According to the invention of claim 15, the plurality of condensation units are disposed to gently incline from a horizontal direction to facilitate the installation of the condensation unit.

According to the invention of claim 16, a protection tube is disposed on the outside of the plurality of condensation units to be capable of surrounding the latter and of sucking air from its end portion, the intake air is caused to move in the protection tube to be capable of cooling the condensation units and, after cooling the condensation unit, it can be discharged to the outside of the protection tube. With this arrangement, a stable condensation action and a dehumidification effect by the condensation unit can be realized by introducing the air into the protection tube utilizing the so-called chimney effects by the protection tube and causing the air to contact the condensation unit to be cooled.

According to the invention of claim 17, a plurality of tubular condensation units having the same length are adjacently disposed in an upright condition inside the protection tube to enable the compressed air in the condensation units to move in one direction. With this arrangement, the protection tube can be made smaller and lighter and smooth and reasonable condensation action and adiabatic expansion action by the condensation unit can be realized by compactly housing the plurality of condensation units inside the protection tube.

According to the invention of claim 18, the lower end portions of adjacent condensation units are connected through a communication tube of a substantially U-shape, air dryers each equipped with an auto drain are disposed in a downward direction in a middle portion of the communication tube, and the periphery of the air dryers are surrounded by a frame, its support frame and a porous plate. With this arrangement, the air dryers can be protected by automatically discharging a condensate of the compressed air moving in the communication tubes of the lower end portions of the condensation unit and by preventing the invasion of the animals and foreign substances by surrounding the periphery of the air dryers by the frame, its support frame and the porous plate.

According to the invention of claim 19, the protection tube is disposed in an upright condition on a base plate to stabilize the protection tube.

According to the invention of claim 20, in a condensation device for compressed air in which a plurality of hollow condensation units are coaxially connected and compressed air is caused to move in sequence from the upstream side condensation units into the downstream side condensation units to be dehumidified and can be supplied to a downstream side air tool, a vent tube is disposed inside the condensation unit, one or more collision plates capable of colliding with the compressed air are disposed inside the vent tube to enable the compressed air to condense therethrough, a plurality of vent holes are formed on the peripheral surface of the vent tube to enable the compressed air to jet therefrom to the outside of the vent tube to be adiabatically expandable. With this arrangement, decrease in function or malfunction of the air tool can be prevented by improving a cooling effect and a dehumidification capacity over the inside and outside of the vent tube by the condensation action of the compressed air by the collision plates in the vent tube and the adiabatic expansion action resulting from jetting of the compressed air from the vent holes.

According to the invention of claim 21, a plurality of vent holes are formed at a plurality of locations of the peripheral surface of the vent tube to realize an adiabatic expansion action resulting from jetting of the compressed air from the vent holes and to realize a stable adiabatic expansion action resulting from jetting of the compressed air by forming the vent holes at a fixed location of the peripheral surface of the vent tube.

According to the invention of claim 22, a plurality of collision plates are formed with a plurality of jetting ports to improve a condensation action resulting from the collision of the compressed air in the vent tube and to improve a cooling effect and a dehumidification capacity.

According to the invention of claim 23, a protection tube is disposed outside the plurality of condensation units to be capable of surrounding the latter and of sucking air from its one end portion, while the intake air is caused to move in the protection tube to be capable of cooling the condensation units, and after cooling the condensation units, it can be discharged to the outside of the protection tube. With this arrangement, a stable condensation action and a dehumidification effect by the condensation units can be realize by introducing the air into the protection tube utilizing the so-called chimney effect by the protection tube and causing the air to contact the condensation units to be cooled.

According to the invention of claim 24, a plurality of tubular condensation units having the same length are adjacently disposed in an upright condition inside the protection tube to enable the compressed air in the condensation units to move in one direction. With this arrangement, the protection tube can be made smaller and lighter and smooth and reasonable condensation action and adiabatic expansion action by the condensation units can be realized by compactly housing the plurality of condensation units inside the protection tube.

According to the invention of claim 25, the protection tube is disposed in an upright condition on a base plate to assure the stability thereof.

### [Effect of the Invention]

According to the invention of claim 1, since a collision plate capable of colliding with compressed air is provided inside each condensation unit to enable the compressed air to condense and the dehumidified compressed air is provided to be capable of moving in sequence into the downstream side condensation units, a condensation device can be made smaller and lighter and can be easily made at a low cost by simplifying the structure and reducing the number of parts. It is also possible to improve a dehumidification capacity and to prevent decrease in function or malfunction of an air tool by a condensation action in the condensation unit.

According to the invention of claim 2, since the collision plate is formed with a lot of vent holes through which compressed air is jetted to be adiabatically expandable, it is possible to improve the dehumidification capacity by the condensation unit.

According to the invention of claim 3, since a plurality of collision plates are disposed away from each other inside the condensation unit to cause the phases of the vent holes of the collision plates to be shifted from each other, it is possible to improve the collision accuracy of the compressed air by the collision plates and to improve the condensation accuracy.

According to the invention of claim 4, since one or more joint tubes are disposed at the middle part of the condensation unit and one or more collision plates formed with vent holes are disposed away from each other inside the joint tube, the condensation device can be easily made at a low cost by making the structure of the condensation unit simple and reasonable. It is also possible to improve the dehumidification effect by activating the condensation and adiabatic expansion actions of the compressed air.

According to the invention of claim 5, since the collision plate is adhered and attached to the inside of the joint tube by adopting an attachment method using an adhesive in place of the attachment by conventional welding, the condensation device can be safely and easily made at a low cost by dissolving the troublesome and complicated labor.

According to the invention of claim 6, since the joint tube is constituted to be capable of increasing or decreasing the length thereof according to the number of the collision plates disposed inside the joint tube, while the collision plate is attached to the inside of the joint tube to be capable of increasing or decreasing the number thereof, the joint tube can be freely constituted by the number of the collision plates disposed inside the joint tube, a degree of freedom in the constitution and design of the joint tube can be obtained, and the collision plate can be reasonably attached according to the action of the condensation unit.

According to the invention of claim 7, since a longitudinal cross section of the middle part of the condensation unit is formed into a substantially hollow ellipsoid body, a tube internal area becomes large as compared to a straight tube-shaped condensation unit and, by increasing the area of the collision plate disposed inside the joint tube and increasing the number of vent holes, it is possible not only to improve a collision effect of the compressed air and an adiabatic expansion effect by jetting of the compressed air from vent holes, but also to improve the dehumidification or drying action of the compressed air.

According to the invention of claim 8, since a connecting tube formed with a screw portion is connected to both sides in the major axis direction of the condensation unit, it is possible to facilitate the connection of the condensation unit.

According to the invention of claim 9, since the condensation unit is fixed by joining end edges of a pair of condensation housings formed into a bow shape, it is possible to easily realize the manufacture of a deformed condensation unit at a low cost.

According to the invention of claim 10, since the collision plates formed with a plurality of vent holes are disposed opposite to each other on the inner surface of the condensation housings, a simple structure can be realized by the combination of the condensation housings and the collision plates.

According to the invention of claim 11, since the condensation housing is formed at its bowl bottom portion with a connecting hole to which the connecting tube is connected, the connection of the connecting tube to the condensation housing can be easily realized.

According to the invention of claim 12, since a female screw portion is formed on the inner surface of one connecting tube, while a male screw portion is formed on the outer surface of the other connecting tube, and the connecting tubes of the adjacent condensation units are threaded to these screw portions to enable the adjacent condensation units to connect, the connection of the condensation units can be facilitated by the connection of the connecting tubes with the screw portions.

According to the invention of claim 13, since the male screw portion of the connecting tube is formed into a tapered screw, the flow of compressed air can be stabilized by suppressing an inner diameter difference of the connecting part of the connecting tube.

According to the invention of claim 14, since the plurality of condensation units are vertically disposed, installation areas of the condensation units can be made compact.

According to the invention of claim 15, since the plurality of condensation units are disposed to gently incline from a horizontal direction, the installation of the condensation units can be facilitated.

According to the invention of claim 16, since a protection tube is disposed outside the plurality of condensation units to be capable of surrounding the latter and of sucking air from its end portion, while the intake air is caused to move in the protection tube to be capable of cooling the condensation units and, after cooling the condensation units, it can be discharged to the outside of the protection tube, a stable condensation action and a dehumidification effect can be achieved by the condensation units by introducing the air into the protection tube utilizing the so-called chimney effect by the protection tube and causing the air to contact the condensation units to be cooled.

According to the invention of claim 17, since a plurality of tubular condensation units having the same length are adjacently disposed in an upright condition inside the protection tube to enable the compressed air in the condensation units to move in one direction, the protection tube can be made smaller and lighter and smooth and reasonable condensation action and adiabatic expansion action can be realized by the condensation units by compactly housing the plurality of condensation units inside the protection tube.

According to the invention of claim 18, since the lower end portions of the adjacent condensation units are connected through a communication tube of a substantially U-shape, air dryers each equipped with an auto drain are disposed in a downward direction in a middle portion of the communication tube, and the periphery of the air dryers is surrounded by a frame, its support frame and a porous plate, the air dryers can be protected by automatically discharging a condensate of the compressed air moving in the communication tubes of the lower end portions of the condensation units and by preventing the invasion of animals and foreign substances by surrounding the periphery of the air dryers by the frame, its support frame and the porous plate.

According to the invention of claim 19, since the protection tube is disposed in an upright condition on a base plate, the stabilization of the protection tube can be realized.

According to the invention of claim 20, since a vent tube is disposed inside the condensation unit, one or more collision plates capable of colliding with the compressed air are disposed inside the vent tube to enable the compressed air to condense therethrough, and a plurality of vent holes are formed on the peripheral surface of the vent tube to enable the compressed air to jet therefrom to the outside the vent tube to be adiabatically expandable, the decrease in function or malfunction of the air tool can be prevented by improving a cooling effect and a dehumidification capacity over the inside and outside of the vent tube by the condensation action of the compressed air by the collision plates in the vent tube and the adiabatic expansion action resulting from jetting of the compressed air from the vent holes.

According to the invention of claim 21, since a plurality of vent holes are formed at a plurality of locations of the peripheral surface of the vent tube, an adiabatic expansion action resulting from jetting of the compressed air from the vent holes can be realized and a stable adiabatic expansion action resulting from jetting of the compressed air can be realized by forming the vent holes at a fixed location of the peripheral surface of the vent tube.

According to the invention of claim 22, since a plurality of collision plates are formed with a plurality of jetting ports, a cooling effect and a dehumidification capacity can be improved by improving a condensation action resulting from the collision of the compressed air in the vent tube.

According to the invention of claim 23, since a protection tube is disposed outside the plurality of condensation units to be capable of surrounding the latter and of sucking air from its one end portion, while the intake air is caused to move in the protection tube to be capable of cooling the condensation units and, after cooling the condensation units, it can be discharged to the outside of the protection tube, a stable condensation action and a dehumidification effect by the condensation units can be achieved by introducing the air into the protection tube utilizing the so-called chimney effect by the protection tube and causing the air to contact the condensation units to be cooled.

According to the invention of claim 24, since a plurality of tubular condensation units having the same length are adjacently disposed in an upright condition inside the protection tube to enable the compressed air in the condensation units to move in one direction, the protection tube can be made smaller and lighter and smooth and reasonable condensation action and adiabatic expansion action by the condensation units can be realized by compactly housing the plurality of condensation units in the protection tube.

According to the invention of claim 25, since the protection tube is disposed in an upright condition on a base plate, the stability of the protection tube can be assured.

### [Brief Description of the Drawings]

Fig.1 is an explanatory view showing an installation status of a condensation tube and its utilization status in a first embodiment of the present invention and the condensation tube is vertically disposed;
Fig.2 is an enlarged cross-sectional view of a main part of Fig.1;
Fig.3 is an enlarged cross-sectional view of a main part of Fig.2;
Fig.4 is an enlarged cross-sectional view of a condensation unit applied to the present invention;
Fig.5 is a plan view of Fig.4;
Fig.6 is a bottom view of Fig.4;
Fig.7 is an enlarged cross-sectional view taken along line A-A of Fig.3;
Fig.8 is an enlarged cross-sectional view of a main part of a second embodiment of the present invention in which a condensation tube and a protection tube are disposed to slightly incline from a horizontal direction;
Fig.9 is an enlarged cross-sectional view of a main part of Fig.8;
Fig.10 is an enlarged cross-sectional view of a main part of a third embodiment of the present invention in which a joint tube is disposed at the middle part of a condensation unit and a plurality of vent plates are disposed within the joint tube;
Fig.11 is a perspective view showing an installation status of a protection tube applied to a fourth embodiment of the present invention;
Fig.12 is a plan view showing the inside of the protection tube of Fig.11 and four tubular condensation tubes are housed therein;
Fig.13 is a cross-sectional view taken along line B-B of Fig.12;
Fig.14 is a cross-sectional view taken along line C-C of Fig.12;
Fig.15 is a longitudinal cross-sectional view of a condensation unit housed in the protection tube applied to the fourth embodiment;
Fig.16 is an enlarged plan view of a vent plate disposed in the condensation tube;
Fig.17 is a perspective view showing an installation status of a protection tube applied to a fifth embodiment of the present invention;
Fig.18 is a slightly enlarged plan view showing the inside of the protection tube of Fig. 17 and six tubular condensation tubes are housed therein;
Fig.19 is a cross-sectional view taken along line D-D of Fig.18;
Fig.20 is a cross-sectional view taken along line E-E of Fig.18;
Fig.21 is a longitudinal cross-sectional view od a condensation unit applied to a sixth embodiment of the present invention;
Fig.22 is a cross-sectional view showing an application embodiment of the condensation unit as shown in Fig.21;
Fig.23 is an enlarged view of a collision plate applied to the condensation unit as shown in Fig.22;
Fig.24 is a longitudinal cross-sectional view of a condensation unit applied to a seventh embodiment of the present invention;
Fig.25 is an enlarged cross-sectional view of a main part of Fig.24; and
Fig.26 is a longitudinal cross-sectional view of the condensation unit showing an application embodiment of the seventh embodiment.

### [Best Mode for Carrying Out the Invention]

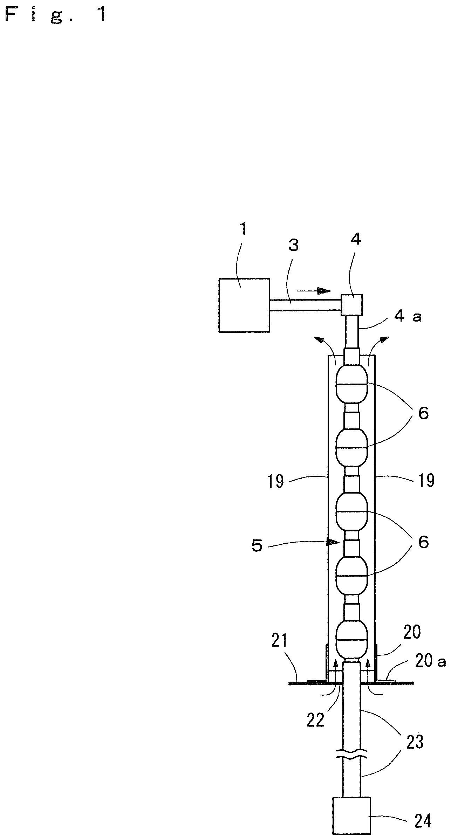

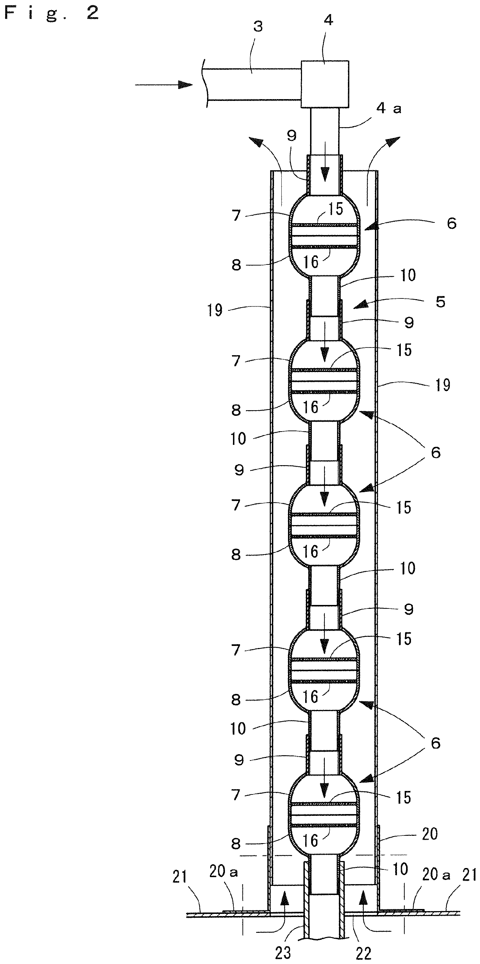

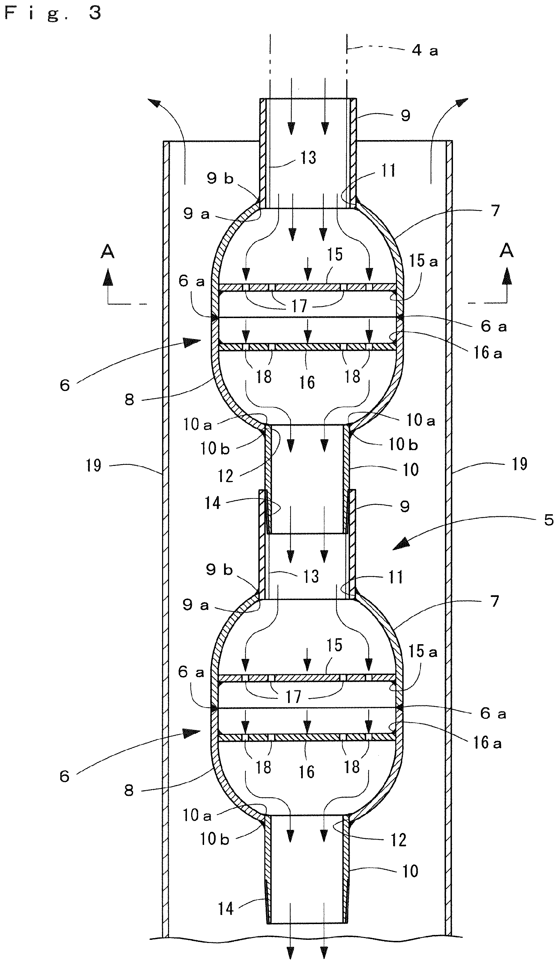

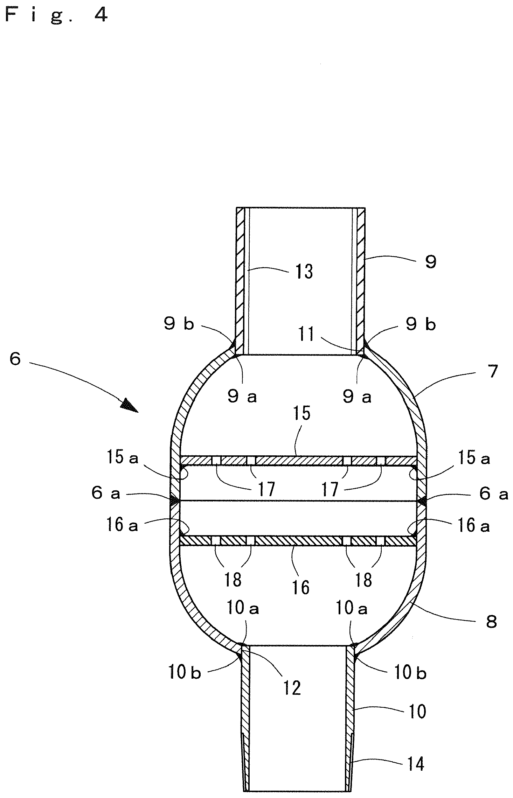

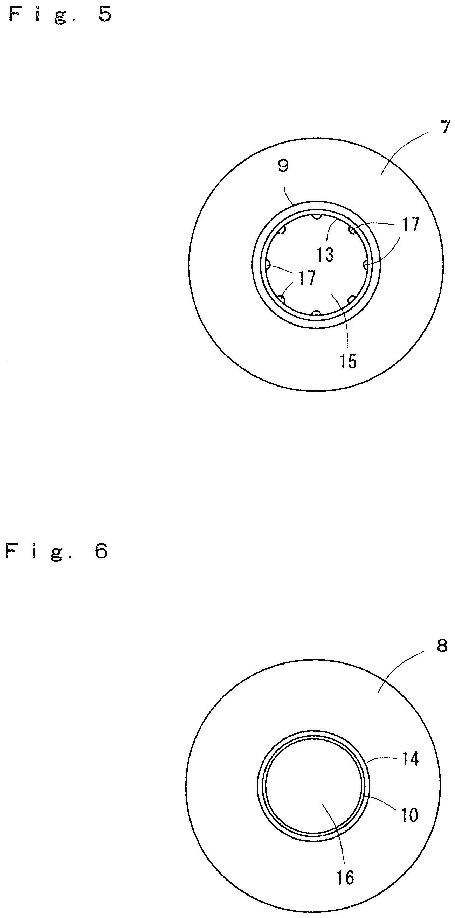

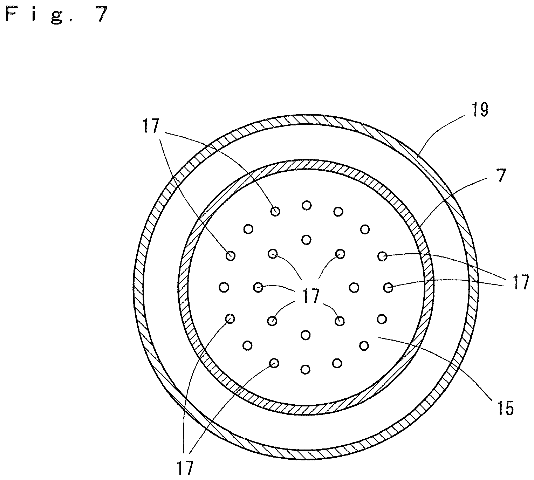

The present invention will now be described below with reference to a first embodiment shown in the figures. Referring to Figs.1 to 7, reference numeral 1 indicates an air compressor installed in a factory which is provided to be capable of delivering compressed air of high temperature and high pressure generated therein to a joint 4 from an air conduit 3 and of delivering it to a condensation tube 5 from an outlet tube 4a of the joint 4.

The condensation tube 5 is disposed to connect a plurality of condensation units 6 (i.e. 5 condensation units 6 in the embodiment) in a vertical direction and a longitudinal cross section of the condensation unit 6 is formed into a hollow ellipsoid body. The condensation unit 6 is composed of a pair of condensation housings 7, 8 and a pair of connecting tubes 9, 10 connected to both sides in a major axis direction of the condensation housings.

The condensation housings 7, 8 are made by forming a thick metal plate such as a stainless-steel plate or an aluminum plate into a substantially bowl shape, wherein the large diameter side opening edges are joined facing each other and the joint portions are connected by welding, for example, a TIG welding or the like. Numeral 6a in the figures indicates a welded portion of the opening edge.

Bowl bottom portions of the condensation housings 7, 8 are formed with connecting holes 11, 12 of the large and small different diameters and one end of the connecting tube 9 is inserted into the large diameter side connecting hole 11, while one end of the connecting tube 10 is inserted into the small diameter side connecting hole 12, and the inside and outside positions of those insertion portions are welded by, for example, TIG welding or the like. Numerals 9a, 9b, 10a and 10b indicate welded portions of those inside and outside positions.

The connecting tubes 9, 10 are made by cutting metal tubes, such as a stainless- steel tube or an aluminum tube, of the large and small different dimeters into a predetermined length, wherein the length of the connecting tube 9 is made slightly shorter than that of the connecting tube 10.

A female screw portion 13 is formed on the inner surface of the connecting tube 9 and the outlet tube 4a of the joint 4 is threaded to the female screw portion 13 of the connecting tube 9 connected to the uppermost condensation unit 6.

A tapered screw portion 14 is formed on the outer periphery of a tip portion of the connecting tube 10 and is threaded to the female screw portion 13 of the connecting tube 9 connected to the condensation unit 6 located directly thereunder.

A pair of collision plates 15, 16 are disposed opposite to each other on the opening side of the condensation housings 7, 8 and are annularly provided with a lot of vent holes 17, 18 having the same diameter.

The collision plates 15, 16 are respectively formed into circular plate shapes having the same diameter by a thick metal plate such as a stainless-steel plate or an aluminum plate and the outer peripheral portions thereof are fixed to the inner surface of the condensation housings 7, 8 by welding by, for example, TIG welding or the like. Numerals 15a, 16a indicate the welded portions thereof.

In this case, in place of disposing the collision plates 15, 16 to cause the vent holes 17, 18 to be opposite to each other, it is desirable that either one of the collision plates 15, 16 is disposed to rotate by a fixed angle and to shift the fitting position (phase) of the vent holes 17, 18 and, for example, compressed air jetted from the vent hole 17 of the collision plate 17 is caused to collide between the vent holes 18, 18 of the collision plate 16, thereby improving the collision accuracy of the compressed air and the condensation effect thereof.

In this case, the compressed air introduced into the upstream side connecting tube 9 inside each condensation unit 6 is guided by a concave curved surface inside the condensation housing 7 to move inside and is caused to collide with the collision plate 15 disposed in front of the moving direction to be condensed and a part thereof is liquefied and around this time, it is pushed into the vent hole 17 to jet to the other side of a collision plate 15, thereby adiabatically expanding to liquefy a part thereof.

In this case, the liquefied droplets are blown off together with the compressed air and are provided to move downward.

The compressed air jetted to the other side of the collision plate 15 is caused to collide with the opposite collision plate 16 to be condensed and a part thereof is liquefied and around this time, it is pushed into the vent hole 18 to jet to the other side of the collision plate 16, thereby adiabatically expanding to liquefy a part thereof. In this case, the liquefied droplets are blown off together with the compressed air and are provided to move downward.

In this manner, the compressed air jetted from the vent hole 18 is guided by the concave curved surface inside the condensation housing 8 to be delivered to the connecting tube 10 and can be introduced into the condensation unit 6 provided directly thereunder.

In this case, since the tapered screw portion 14 of the connecting tube 10 is screwed into the female screw portion 13 of the connecting tube 9 connected to the condensation unit 6 provided directly thereunder, a tube diameter difference between the connecting tubes 9 and 10 is reduced to suppress fluctuation of the compressed air moving inside these tubes 9, 10, thereby suppressing pressure loss to realize the stable move of the compressed air.

A protection tube 19 also serving as a large diameter and long cooling tube is provided in an upright condition outside the condensation tube 5, a support tube 20 is attached to the lower end portion of the protection tube 19, and a flange 20a provided at the lower end of the support tube 20 is fixed to an immovable base plate 21.

The protection tube 19 is composed of a metal tube, such as a stainless-steel tube or an aluminum tube, of about 80 cm long and with an internal diameter of about 10 cm, which can house a plurality of condensation units 6. The lower portion of the protection tube 19 is firmly supported by the support tube 20 and the upper end portion thereof is provided to be open directly under the joint 4.

A large diameter air intake hole 22 is formed in the center of the base plate 21 to be capable of communicating with the air around the lower portion of the base plate 21. The air is taken from below the base plate 21 by the so-called chimney effect of the protection tube 19 and is introduced into the protection tube 19 to move upward so that the condensation tube 5 disposed therein can be cooled.

The connecting tube 10 of the lowermost condensation unit 6 of the condensation tube 5 is disposed directly above and inside the air intake hole 22 and the tapered screw portion 14 thereof is threaded to the upper end portion of an air conduit 23. The air conduit 23 is disposed below the air intake hole 22 and is connected in the right place to a supply tube (not shown) of an air tool 24 such as an air driver and an impact wrench which is used in a factory.

A condensation device for compressed air constituted in this way requires the manufacture of the condensation tube 5 and the protection tube 19 and the assembly thereof. Among these, the condensation tube 5 requires the manufacture of one or more condensation units 6 according to a flow rate of the compressed air to be dehumidified or dried.

The condensation unit 6 is provided with a pair of condensation housings 7, 8 which are made by forming a thick stainless-steel plate (with thickness of 3 mm in the embodiment) into a substantially bowl shape by, for example, press processing or spinning-drawing processing, and the bowl bottom portions thereof are formed with connecting holes 11, 12 of the large and small different diameters.

In this manner, by forming a longitudinal cross section of the middle part of the condensation unit 6 into a substantially hollow ellipsoid body, it is possible to expand a tube inner cross-sectional area compared to a straight-tube shaped condensation unit 6, while, by expanding areas of the collision plates 15, 16 disposed therein and increasing the number of the vent holes 17, 18, it is possible to improve a collision effect of the compressed air and an adiabatic expansion effect by jetting from the vent holes and to accelerate dehumidification or drying of the compressed air. Further, by expanding an outer surface area and by increasing the contact of the condensation unit 6 with the air inside the protection tube 19, cooling is accelerated to improve the dehumidification or drying of the compressed air by the condensation tube 5.

On the other hand, the connecting tubes 9, 10 are formed by cutting metal tubes, such as a stainless-steel tube or an aluminum tube, of the large and small different diameters into a predetermined length and making the length of the connecting tube 9 slightly shorter than that of the connecting tube 10, wherein the female screw portion 13 is formed on the inner surface of the connecting tube 9 and the tapered screw portion 14 is formed on the outer periphery of the tip portion of the connecting tube 10.

Further, the collision plates 15, 16 disposed inside the condensation unit 6 are formed by punching a thick metal plate (with thickness of 3 mm in the embodiment) such as a stainless-steel plate or an aluminum plate into a circular plate shape having the same diameter by, for example, press processing, wherein the plate surface is annularly provided with a plurality of vent holes 17, 18.

The collision plates 15, 16 formed with the vent holes 17, 18 are disposed on the inner surface of the large diameter opening side of the condensation housings 7, 8, wherein the periphery of the joint portions is welded (15a, 16a) by, for example, TIG welding or the like.

After this, one end of the connecting tube 9 is inserted into the connecting hole 11 of the condensation housing 7 and the inside and outside positions of the joint portion are connected by welding (9a, 9b) by, for example, the TIG welding or the like.

Likewise, one end of the connecting tube 10 is inserted into the connecting hole 12 of the condensation housing 8 and the inside and outside positions of the joint portion are connected by welding (10a, 10b) by, for example, the TIG welding or the like.

In this way, a large diameter side opening end portion of the condensation housing 7 to which the collision plate 15 is welded and the connecting tube 9 is connected and a large diameter side opening end portion of the condensation housing 8 to which the collision plate 16 is welded and the connecting tube 10 is connected are faced with each other to be joined, wherein the joint portion is connected by welding (6a) by, for example, the TIG welding or the like.

In this manner, after manufacturing of one condensation unit 6, another condensation unit 6 is manufactured in the same way, thereby manufacturing the plurality of condensation units 6.

Next, prescribed numbers of condensation units 6 manufactured as above are prepared according to a flow rate of the compressed air to be dehumidified or dried and these are assembled. In the case of assembly, the connecting tube 9 and the connecting tube 10 of each condensation unit 6 are disposed in the same way. For example, the connecting tube 9 is disposed on one side, while the connecting tube 10 is disposed on the other side.

Then, the tapered screw portion 14 of the connecting tube 10 is threaded into the female screw portion 13 of the connecting tube 9 of the adjacent downstream side condensation unit 6 to connect these two condensation units 6, 6.

In the same way as above, the tapered screw portion 14 of the connecting tube 10 of the condensation unit 6 is threaded into the female screw portion 13 of connecting tube 9 of the adjacent downstream side condensation unit 6 to connect the condensation unit 6, one after another.

In the present embodiment, assembly is completed by connecting five units of condensation units 6.

As mentioned above, since the condensation device of the present invention can be realized by forming of the condensation housings 7, 8, forming of the connecting holes 11, 12, cutting of the connecting tubes 9, 10 into the predetermined length, forming of the screw portions 13, 14, punching of the collision plates 15, 16, forming of the vent holes 17, 18, and assembly by those welding, it does not require manufacture and installation of the collision plates, forming of the complicated partition walls and assembly of these with the outlet tube which are seen in the conventional technique. Accordingly, the condensation device of the present invention can be made at a low cost by reducing the number of parts, making the inner structure of the condensation unit 6 simple, and facilitating the manufacture and assembly.

After assembly of the condensation tube 5, a straight-tube shaped protection tube 19 with a predetermined length is prepared and disposed directly under the joint 4. In this case, the support tube 20 is attached to the lower end portion of the protection tube 19 and the flange 20a provided at the lower end of the support tube 20 is fixed to the unmovable base plate 21 to support the protection tube 19.

Next, by inserting the condensation tube 5 from the air intake hole 22 of the base plate 21 and moving it upward, the female screw portion 13 of the connecting tube 9 connected to the uppermost condensation unit 6 of the condensation tube 5 is threaded into the outlet tube 4a of the joint 4 to form a connection therebetween.

On the other hand, the upper end portion of the air conduit 23 is threaded into the tapered screw portion 14 of the connecting tube 10 of the lowermost, i.e. the downstream side condensation unit 6 of the condensation tube 5 located directly above the air intake hole 22 to form a connection therebetween.

The air supply tube (not shown) for various air tools 24 is connected to the right place below, i.e. the downstream portion of, the air conduit 23.

In this case, since both the condensation tube 5 and the protection tube 19 are about 80 cm long, comparatively compact, and not heavy, assembly and installation of those can be easily performed.

Also, since both the condensation tube 5 and the protection tube 19 are vertically disposed, an installation area of these is made compact and it is suitable for installation both on the inside and outside of the factory.

Since the condensation device of the present invention disposed in this manner is provided with the condensation tube 5 inside the protection tube 19, it is possible to protect the condensation tube 5 from wind and rain and solar radiation when the condensation device is disposed outdoors.

In such a condensation device, the compressed air generated by driving the air compressor 1 is introduced into the connecting tube 9 of the upper end portion of the condensation tube 5 from the outlet tube 4a, through the joint 4 from the air conduit 3.

The compressed air moves to the uppermost condensation unit 6 of the condensation tube 5 and is guided by the curved surface of the condensation housing 7 of the condensation unit 6 to collide with the collision plate 15 to be condensed. After liquefying part of the compressed air to be cooled, the air is pushed into the vent hole 17 and jets to the other side of the collision plate 15, then the air is adiabatically expanded to cool part of it and is cooled.

After this, the compressed air collides with the opposite collision plate 16 to be condensed and after liquefying part of it to be cooled, the air is pushed into the vent hole 18 and jets to the other side of the vent hole 16, wherein the air adiabatically expanded to cool part of it and is cooled.

In this case, in place of disposing the collision plates 15, 16 to cause the vent holes 17, 18 to be coaxially opposite to each other, if either one of the collision plates 15, 16 is disposed to rotate by a fixed angle and to shift the fitting position (phase) of the vent holes 17, 18, it is possible to cause the compressed air jetted from, for example, the vent hole 17 of the collision plate 15 to surely collide between the vent holes 18, 18 of the collision plate 16 and to improve the collision or condensation effect of the compressed air.

After this, the compressed air is guided by the curved surface of the condensation housing 8 to move to the connecting tube 10 and moves to the adjacent downstream side condensation unit 6 through the connecting tube 9 connected to the connecting tube 10.

As mentioned above, the compressed air is guided by the curved surface of the condensation housing 7 to move to the condensation unit 6 and collides with the collision plate 15 to be condensed. After liquefying part of the compressed air to be cooled, the air is pushed into the vent hole 17 to jet to the other side of the collision plate 15, wherein the air is adiabatically expanded to liquefy part of it and is cooled.

After this, the compressed air collides with the opposite collision plate 16 to be condensed and after liquefying part of it to be cooled, the air is pushed into the vent hole 17 to jet to the other side of the collision plate 16, wherein the air is adiabatically expanded to liquefy part of it and is cooled.

And then, the compressed air moves to the connecting tube 10 from the condensation unit 6 and further moves to the adjacent downstream side condensation unit 6 through the connecting tube 9 connected to the connecting tube 10.

From now on, the compressed air sequentially moves to the downstream side condensation unit 6 and is gradually dehumidified or dried and cooled while receiving the condensation and adiabatic expansion actions repeatedly.

In this way, the compressed air moved to the lowermost condensation unit 6 of the condensation tube 5 is fully dehumidified or dried and cooled, moves to the air conduit 23 connected to the connecting tube 10 of the condensation unit 6, and is supplied to the air supply tube (not shown) adapted to communicate with each air tool connected to the right place of the air conduit 23. Thus, a decrease in function or malfunction of the air tool 24 can be prevented.

On the other hand, before and after introduction of the compressed air into the condensation tube 5 or the condensation unit 6, a tunnel effect of the protection tube 19 is exhibited, wherein the air is taken into the protection tube 19 from the air intake hole 22, moves upward to contact the surface of the condensation tube 5 or the condensation unit 6 and the connecting tubes 9, 10, and cool those.

Accordingly, the condensation effect and the adiabatic expansion effect of the compressed air by the condensation tube 5 are increased.

The air heat-exchanged in this way is discharged from the upper end portion of the protection tube 19. In this case, since the condensation housings 7,8 are formed into a bowl shape and a contact area is widely secured compared to the straight tube, the cooling effect is accelerated accordingly and the dehumidification or drying of the compressed air is accelerated.

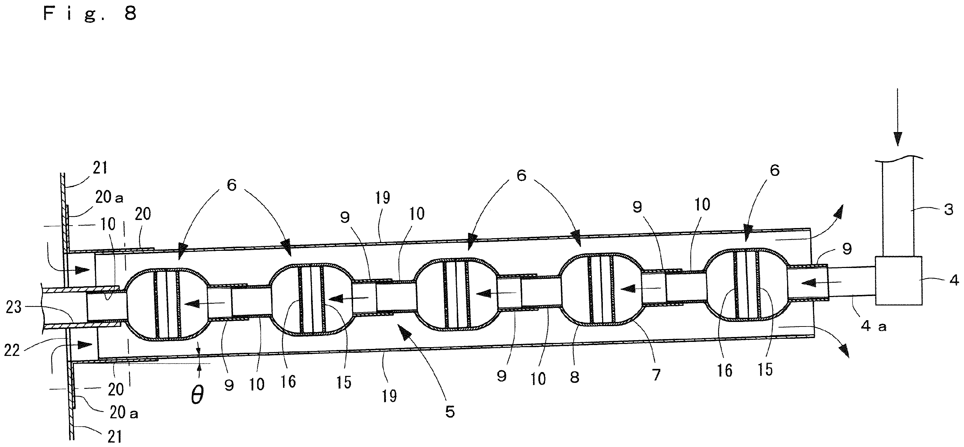

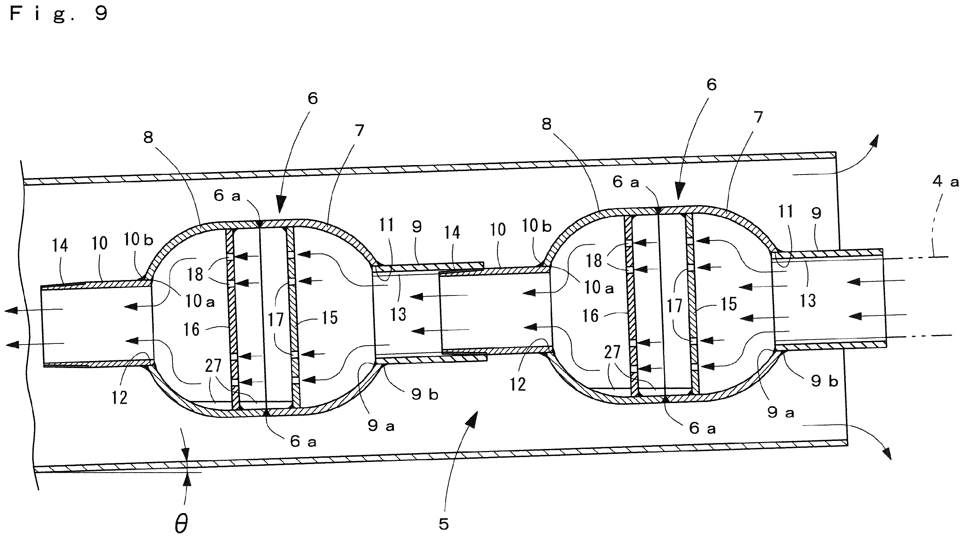

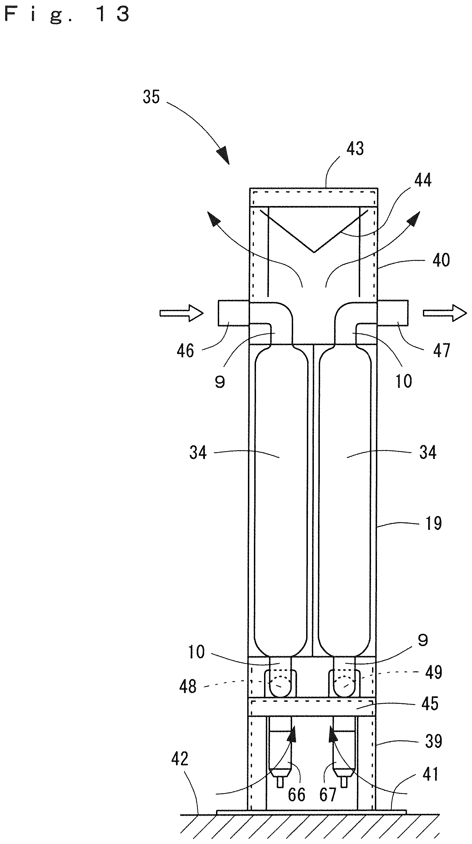

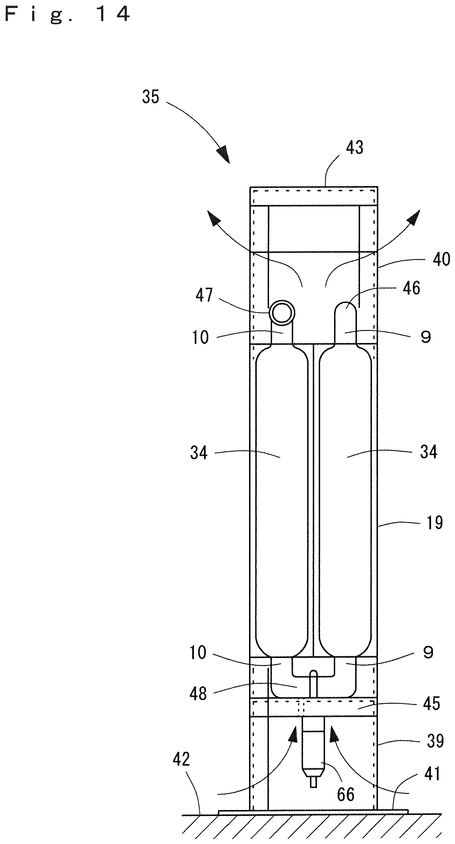

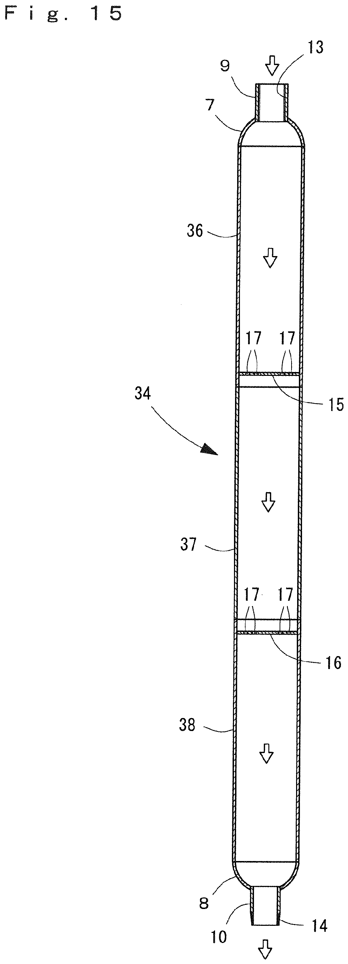

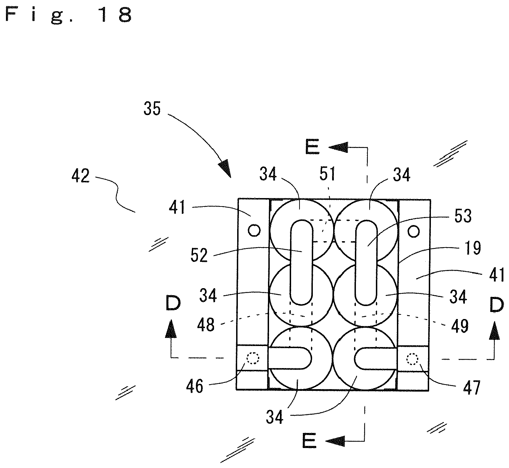

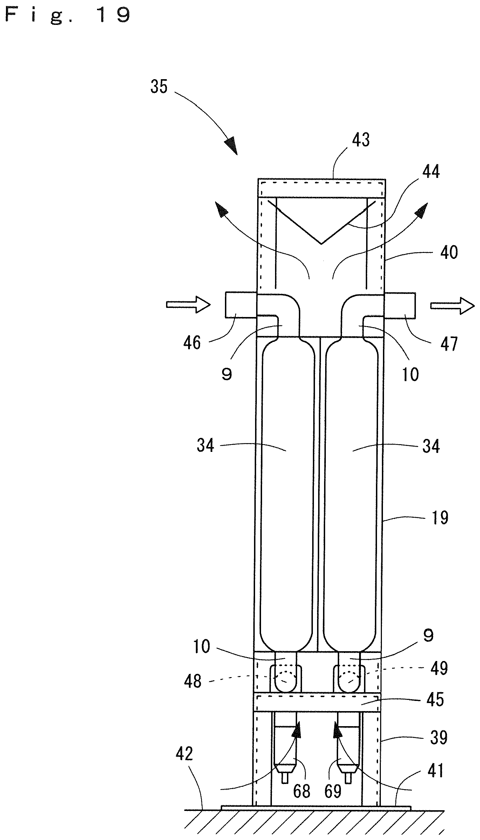

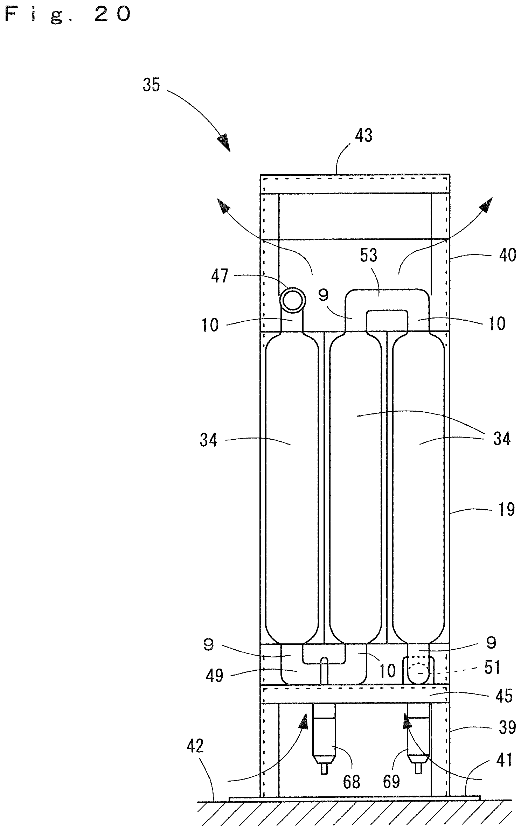

Figs.8 to 26 indicate other embodiments of the present invention, wherein a component corresponding to the above-mentioned embodiments is denoted by the same reference numeral. Among these, Figs.8 and Fig.9 indicate a second embodiment of the present invention. In this embodiment, since the condensation tube 5 is disposed to slightly incline (θ) from a horizontal direction in place of vertically disposing it, while the protection tube 19 is also coaxially disposed, in other words, the protection tube 19 is disposed to slightly incline (θ) from the horizontal direction, the disposition of the condensation tube 5 can be facilitated and a cooling effect of the condensation tube 5 by the protection tube 19 can also be held by securing a chimney effect of the protection tube 19.

The manufacture, disposition, installation and effects of the condensation tube 5 and the condensation unit 6 and the connecting tubes 8, 9 in this embodiment are substantially the same as the above-mentioned embodiment.

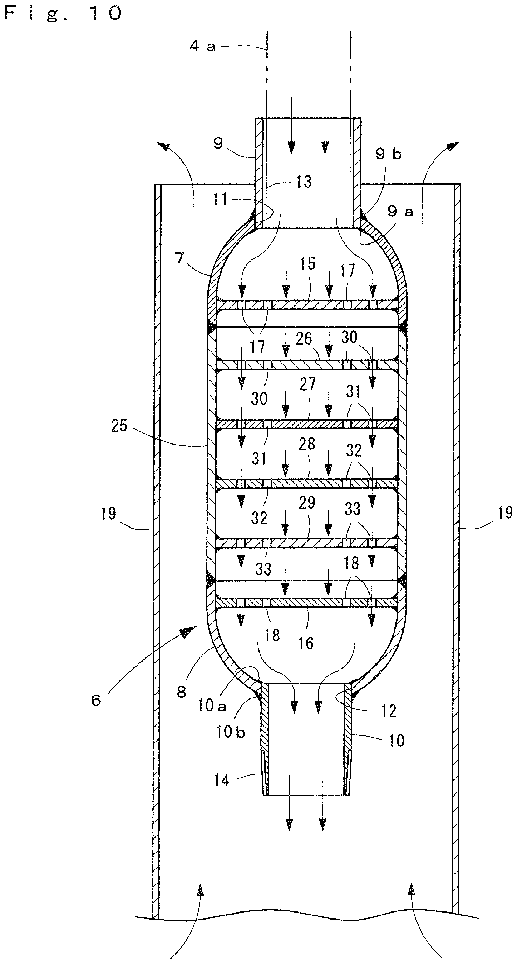

Fig.10 indicates a third embodiment of the present invention. In this embodiment, a joint tube 25 made of metal such as a stainless-steel tube or an aluminum tube is inserted between the condensation housings 7, 8 and the joint portions thereof are welded, while a plurality of vent plates 26 to 29 are disposed at equal intervals inside the joint tube 25 to be welded and are annularly provided with a plurality of vent holes 30 to 33 having the same diameter as that of the vent holes 17, 18 to shift their phases, thereby making the condensation unit 6 long.

With this arrangement, compared to the structure in which a single collision plate 15, 16 is attached to the bowl-shaped condensation housings 7, 8, since a plurality of vent plates 26 to 29 are easily attached to the joint tube 25, the condensation unit 6 can be reasonably made at a low cost. By causing the compressed air to efficiently collide with the vent plates 26 to 29, improving the condensation effect, and improving an adiabatic expansion effect resulting from jetting from the vent holes 30 to 33, the condensation effect of the compressed air can be accelerated to improve the dehumidification and drying effects.

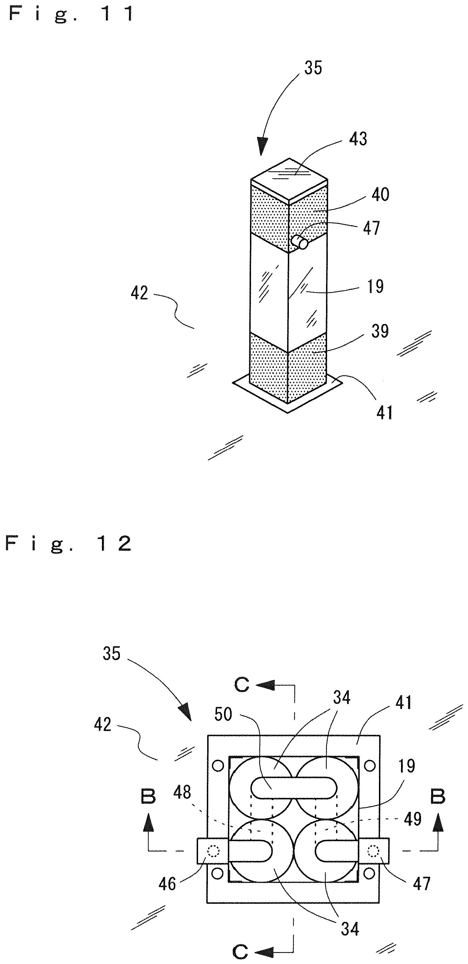

Figs.11 to 16 indicate a fourth embodiment of the present invention in which a new condensation unit 34 and a condensation device 35 in which the plurality of condensation units 34 are compactly disposed in one direction are shown.

The condensation unit 34 is formed into a long tubular shape which is about 998 mm long by joining a plurality of same joint tubes 36 to 38 made of metal tube, such as a stainless-steel tube or an aluminum tube, which is 70.3 mm in inner diameter, 270 mm in length, and 3 mm in thickness, joining the condensation housings 7, 8 to its both end portions, and connecting the connecting tubes to its both end portions.

The end portions of the joint tubes 36, 38 are provided with collision plate 15, 16 of which the inner surface is annularly formed with a lot of vent holes 17.

The condensation device 35 is formed into a rectangular column shape causing the same chimney effect as above and is also formed to be capable of housing the plurality of condensation units 34 in an upright condition therein. The condensation device 35 is provided on the peripheral surface of its upper and lower end portions with porous plates 39, 40 capable of flowing air in and out, wherein the air sucked from the lower porous plate 39 is introduced to the inside to move upward and can be discharged from the upper porous plate 40. A flange 41 is disposed in a protruding condition at the lower end portion to enable the condensation device 35 to be disposed in an upright position on a base 42 such as a floor surface.

In the figures, reference numeral 43 indicates a cover plate provided on the upper end portion of the condensation device 35 and reference numeral 44 indicates a baffle plate of a V-shaped cross section provided on the upper side of the inside of the condensation device 35.

The lower portion of the inside of the condensation device 35 is provided with a frame 45 on which a plurality of condensation units 34 are mounted in an upright condition to be housed. The upper end portion of a pair of condensation units 34, 34 of one side of the inside of the condensation device 35 is provided with an inlet 46 adapted to communicate with the joint 4 and with an outlet 47 adapted to communicate with the air tool 24, wherein the connecting tube 9 is connected to the inlet 46, while the connecting tube 10 is connected to the outlet 47.

Namely, each condensation unit 34 is connected to enable the compressed air to move in one direction from the connecting tube 9 to the connecting tube 10, wherein both end portions of substantially U-shaped communicating tubes 48, 49 disposed at the lower end portions of the condensation units 34, 34 are threaded to the connecting tube 10 and the connecting tube 9 respectively, while both end portions of inverted U-shaped communicating tube 50 disposed at the upper end portion are threaded to the connecting tube 9 and the connecting tube 10 respectively.

The middle part of the communicating tubes 48, 49 is formed with a drain discharge hole (not shown) to which air dryers 66, 67 provided with an auto drain incorporating a float (not shown) are attached in a downward direction.

When condensed water is stored in the communicating tubes 48, 49, it is powerfully introduced into the air dryers 66, 67 from the drain discharge hole. When this condensed water, that is, the drain of a predetermined amount is stored in the auto drain, the stored drain surface is detected by the float, wherein the float operates to open an on-off valve of a discharge tube (not shown), thereby automatically discharging the drain to the outside.

The air dryers 66, 67 are surrounded by the frame 45, its support frame, and porous plate 39 and are protected from invasion of animals and/or foreign matters.

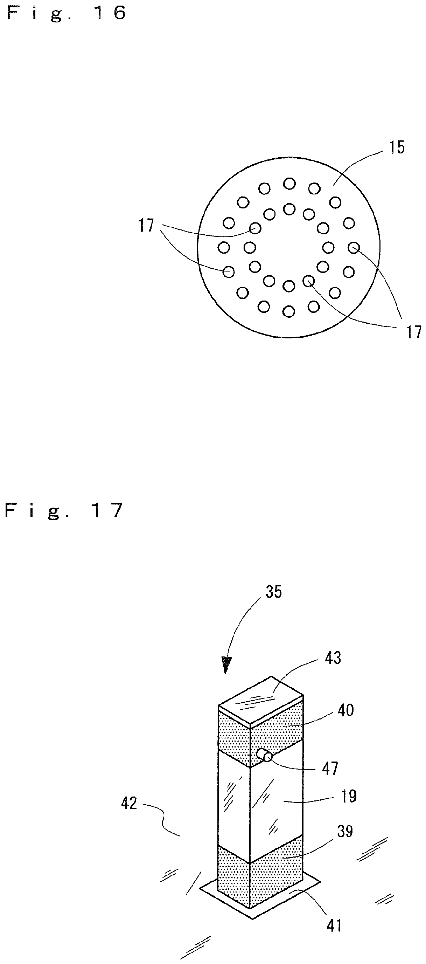

Figs.17 to 20 indicate a fifth embodiment of the present invention. In this embodiment, the protection tube 19 is made slightly larger than that of the fourth embodiment and is provided to house six condensation units 34 therein. The communicating tubes 48, 49, 50 to 53 are connected to the upper and lower end portions of these to enable the compressed air to move to the outlet 47 from the inlet 46.

Compared to the fourth embodiment, this embodiment is provided, in which the number of the condensation units 34 disposed inside the condensation device 35 is increased to make the condensation unit 34 longer and as a result, a condensation effect improves and cooling and dehumidification or drying of the compressed air are intensified.

The middle part of the substantially U-shaped communicating tubes 48, 49 is formed with the drain discharge hole (not shown) to which the air dryers 68, 69 provided with the auto drain incorporating the float (not shown) are attached in the downward direction.

The air dryers 68, 69 are formed similarly to the air dryers 66, 67 and their operation is substantially the same as that of the air dryers 66, 67.

The air dryers 68, 69 are surrounded by the frame 45, its support frame and porous plate 39 and are protected from invasion of animals and/or foreign matters.

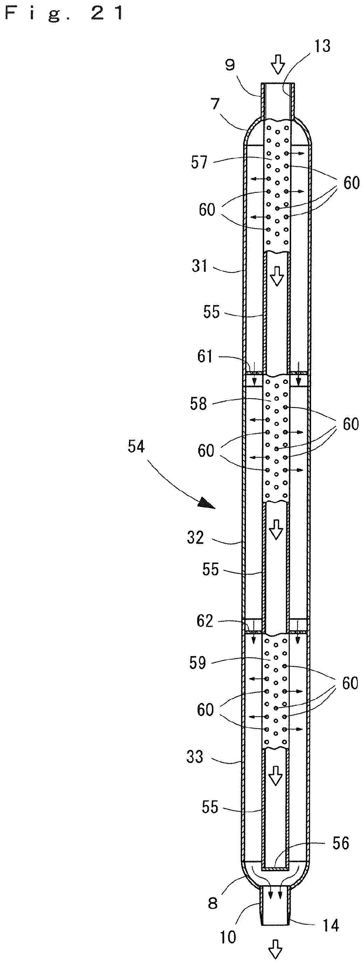

Fig.21 indicates a sixth embodiment of the present invention which has a structure different from the condensation unit disposed inside the condensation device 35 of the fourth and fifth embodiments.

A condensation unit 54 in this embodiment is provided, in which, in place of disposing the vent plates formed with vent holes inside vent tubes 31 to 33, a long vent tube 55 with slightly less than about 1/2 of an outer diameter of the joint tubes 31 to 33 is disposed inside the joint tubes 31 to 33, wherein one end thereof is threaded and attached to the female screw portion 13 of the connecting tube 9, while the other end thereof is provided inside the condensation housing 8. A collision plate 56 is attached to the end portion of the vent tube 55 to close the latter and compressed air sent inside the connecting tube 9 is caused to collide with the collision plate 56 to be condensable.

Jetting portions 57 to 59 are provided at a plurality of locations of the outer periphery of the vent tube 55 and are formed with a lot of vent holes 60 to cause the compressed air to jet therefrom to the outside of the vent tube 55 to be adiabatically expandable.

Reference numerals 61, 62 in the figure indicate ventilatable holding plates for supporting the vent tube 55 to the joint tubes 31, 32.

The condensation unit 54 of this embodiment is provided, in which the vent tube 55 is formed to have a smaller diameter than the joint tubes 31 to 33 and compressed air introduced into the vent tube 55 is caused to collide with the collision plate 56 to be condensed, to jet from the vent holes 60 to be adiabatically expanded, and to improve a condensation action of the compressed air, thereby accelerating a dehumidification effect.

In this case, since the vent holes 60 are formed by limiting the location of the jetting portions 57 to 59 at the plurality of locations of the outer periphery of the vent tube 55, the jetting speed of the compressed air from the vent holes 60 can be kept constant to obtain the desired adiabatic expansion effect.

The compressed air cooled and dehumidified in this manner moves between the joint tubes 31 to 33 and the vent tube 55 and is supplied to the connecting tube 10.

Accordingly, if the condensation unit 54 of this embodiment is incorporated into the condensation device 35 as shown in the fourth and fifth embodiments, the humidification and cooling effects can be more improved.

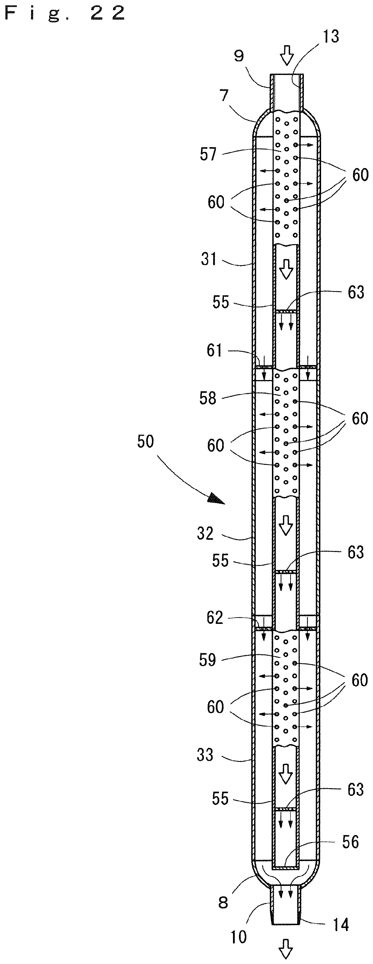

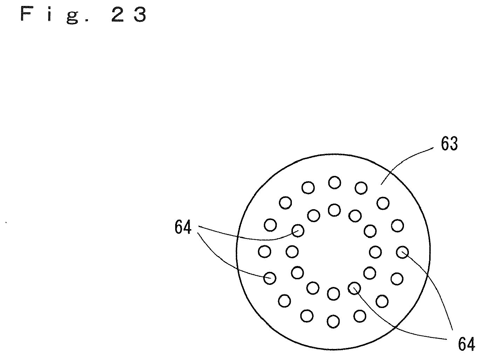

Figs.22 and 23 indicate an application embodiment of the sixth embodiment mentioned above, wherein collision plates 63 are provided on the downstream side of the jetting portions 57 to 59 of the vent tube 55 and are formed with a plurality of jetting ports 64.

The compressed air moving in the vent tube 55 is caused to collide with each collision plate 63 to be condensable and to jet out of each vent hole 60 to be adiabatically expandable.

Namely, this application embodiment is provided, in which, as in the sixth embodiment, the compressed air is caused to collide with each collision plate to be condensed and to jet out of the vent holes to be adiabatically expanded, thereby accelerating the dehumidification and cooling of the compressed air inside and outside the vent tube 55.

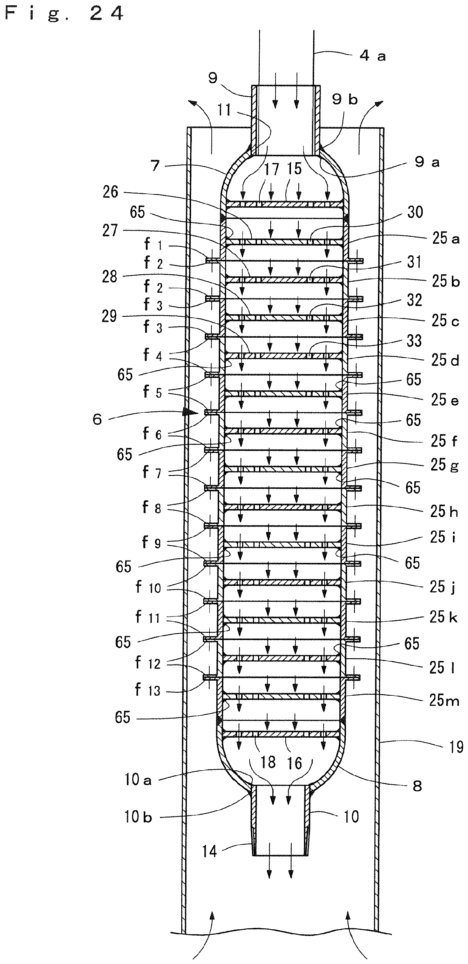

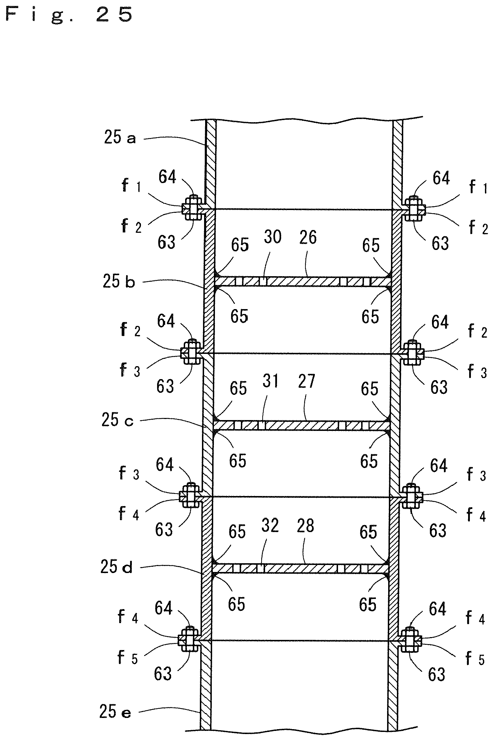

Figs.24 to 26 indicate a seventh embodiment of the present invention. According to this embodiment, in place of disposing a single joint tube 25 made of metal such as a stainless-steel tube or an aluminum tube between the condensation housings 7, 8 and attaching the plurality of vent plates 26 to 29 formed with the vent holes 30 to 33 to the joint tube 25 by the TIG welding as in the third embodiment, a plurality of joint tubes 25a to 25m made of an aluminum tube are disposed between the condensation housings 7, 8 as in Figs.24 and 25 and these are fastened and connected by causing flanges f1 to f13 formed at each tube end portion to face each other, inserting a bolt 63 or a screw into a bolt hole or a screw hole (not shown), and screwing a nut into the bolt or screw.

The joint tubes 25a to 25m are short and made compact and the vent plates 26 to 29, etc. made of an aluminum plate formed with vent holes 30 to 33, etc. are adhered (reference numeral 65) and fixed to the middle part thereof by an adhesive, wherein the joint tubes 25a to 25m to which the vent plates 26 to 29 are attached separately are connected respectively.

The vent plates 26 to 29 are adhered (reference numeral 65) to the joint tubes 25a to 25m by punching, for example, an aluminum plate by press forming, forming vent holes 30 to 33, etc. by punching the punched plate by a press, and applying the adhesive to the peripheral surface of the vent plates 26 to 29.

The joint tubes 25a to 25m are lightweight and inexpensive compared to a stainless-steel tube and can be easily produced because these are made of aluminum tube. The vent plates 26 to 29 are also lightweight and inexpensive compared to a stainless-teel plate because these are made of aluminum plate. Further, since formation of the vent holes 30 to 33 and attachment of the vent plates 26 to 29 to the joint tubes 25a to 25m can also be performed by a simple adhesion (reference numeral 65) in place of special welding, these can be realized with less labor and at a low cost.

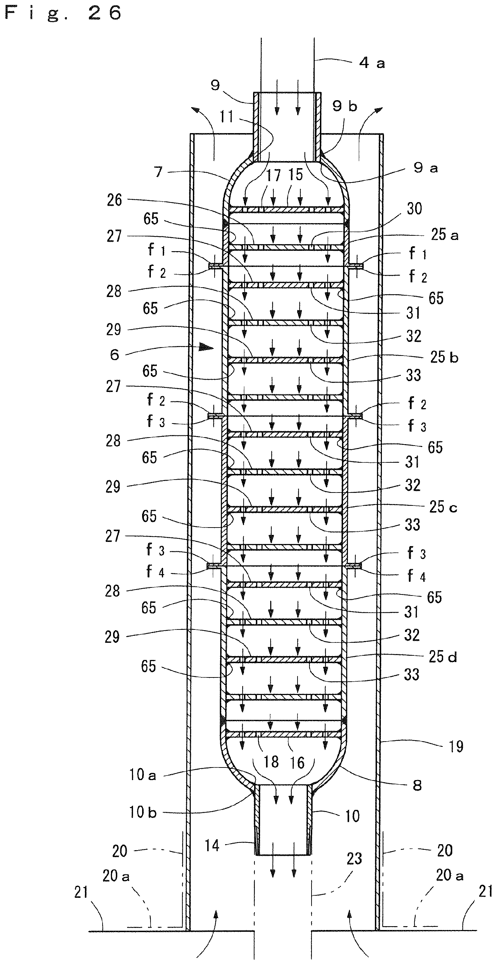

Further, as the application embodiment mentioned above, if the joint tube is composed by attaching a single vent plate to each joint tube 25a to 25m as in Fig.24 and connecting a plurality of joint tubes 25a to 25d to one joint tube as in Fig.26 in place of connecting the joint tubes 25a to 25m individually, it is possible to reduce the number of connections of the joint tubes 25a to 25d, to make the structure simple by omitting formation of the flange, and to reasonably compose the condensation unit 6 by saving labor for connection, and to easily manufacture the condensation unit 6 at a low cost.

### [Industrial Applicability]

The condensation device for compressed air of the present invention can be made smaller and lighter and can also be easily made at a low cost by connecting a plurality of condensation units, simplifying the structure, and reducing the number of parts, and a condensation action and an adiabatic expansion action by the condensation unit can be improved.

### [Description of Reference Numerals]

6, 29, 49: condensation unit
7, 8: condensation housing
9, 10: connecting tube
11, 12: connecting hole
13: female screw portion
14: male screw portion (tapered screw)
15, 16: collision plate
17, 18: vent hole
19: protection tube
25, 36, 37, 38: joint tube
21, 42: base plate
24: air tool
31-33: vent hole
39: porous plate
45: frame
66-69: air dryer
55: vent tube
56: collision plate
60: vent hole
63: collision plate
64: jetting port

## Claims

1. A condensation device for compressed air in which a plurality of hollow condensation units are coaxially connected and compressed air is caused to move in sequence from the upstream side condensation units into the downstream side condensation units to be dehumidified and can be supplied to a downstream side air tool, **characterized in that** a collision plate capable of colliding with the compressed air is provided inside each condensation unit to enable the compressed air to condense and the dehumidified compressed air is provided to be capable of moving in sequence into the downstream side condensation units.

2. The condensation device for compressed air according to claim 1, wherein the collision plate is formed with a lot of vent holes through which the compressed air is jetted to be adiabatically expandable.

3. The condensation device for compressed air according to claim 2, wherein a plurality of collision plates are disposed away from each other inside the condensation unit to cause the phases of the vent holes of the collision plates to be shifted from each other.

4. The condensation device for compressed air according to claim 3, wherein one or more joint tubes are disposed at the middle part of the condensation unit and one or more collision plates formed with vent holes are disposed away from each other inside the joint tubes.

5. The condensation device for compressed air according to claim 4, wherein the collision plate is adhered and attached to the inside of the joint tube.

6. The condensation device for compressed air according to claim 5, wherein the joint tube is constituted to be capable of increasing or decreasing the length thereof according to the number of collision plates disposed inside the joint tube, while the collision plate is attached to the inside of the joint tube to be capable of increasing or decreasing the number thereof.

7. The condensation device for compressed air according to claim 1, wherein a longitudinal cross section of the middle part of the condensation unit is formed into a substantially hollow ellipsoid body.

8. The condensation device for compressed air according to claim 7, wherein a connecting tube formed with a screw portion is connected to both sides in the major axis direction of the condensation unit.

9. The condensation device for compressed air according to claim 7, wherein the condensation unit is fixed by joining end edges of a pair of condensation housings formed into a bowl shape.

10. The condensation device for compressed air according to claim 9, wherein the collision plates formed with a plurality of vent holes are disposed opposite to each other on the inner surface of the condensation housings.

11. The condensation device for compressed air according to claim 8, wherein the condensation housing is formed at its bowl bottom portion with a connecting hole to which the connecting tube is connected.

12. The condensation device for compressed air according to claim 8, wherein a female screw portion is formed on the inner surface of one connecting tube, while a male screw portion is formed on the outer surface of the other connecting tube, and the connecting tubes of the adjacent condensation units are threaded to these screw portions to enable the adjacent condensation units to connect.

13. The condensation device for compressed air according to claim 12, wherein the male screw portion of the connecting tube is formed into a tapered screw.

14. The condensation device for compressed air according to claim 1, wherein the plurality of condensation units are vertically disposed.

15. The condensation device for compressed air according to claim 1, wherein the plurality of condensation units are disposed to gently incline from a horizontal direction.

16. The condensation device for compressed air according to claim 1 or claim 14 or claim 15, wherein a protection tube is disposed outside the plurality of condensation units to be capable of surrounding the latter and of sucking air from its end portion, while the intake air is caused to move in the protection tube to be capable of cooling the condensation units and, after cooling the condensation units, it can be discharged to the outside of the protection tube.

17. The condensation device for compressed air according to claim 16, wherein a plurality of tubular condensation units having the same length are adjacently disposed in an upright condition inside the protection tube to enable the compressed air in the condensation units to move in one direction.

18. The condensation device for compressed air according to claim 17, wherein lower end portions of the adjacent condensation units are connected through a communication tube of a substantially U-shape, air dryers each equipped with an auto drain are disposed in a downward direction in a middle portion of the communication tube, and the periphery of the air dryers are surrounded by a frame, its support frame and a porous plate.

19. The condensation device for compressed air according to claim 17, wherein the protection tube is disposed in an upright condition on a base plate.

20. A condensation device for compressed air in which a plurality of hollow condensation units are coaxially connected and compressed air is caused to move in sequence from the upstream side condensation units into the downstream side condensation units to be dehumidified and can be supplied to a downstream side air tool, **characterized in that** a vent tube is disposed inside the condensation unit, one or more collision plates capable of colliding with the compressed air are provided inside the vent tube to enable the compressed air to condense therethrough, and a plurality of vent holes are formed on the peripheral surface of the vent tube to enable the compressed air to jet therefrom to the outside of the vent tube to be adiabatically expandable.

21. The condensation device for compressed air according to claim 20, wherein a plurality of vent holes are formed at a plurality of locations of the peripheral surface of the vent tube.

22. The condensation device for compressed air according to claim 20, wherein the plurality of collision plates are formed with a plurality of jetting ports.

23. The condensation device for compressed air according to claim 20, wherein a protection tube is disposed outside the plurality of condensation units to be capable of surrounding the latter and of sucking air from its one end portion, while the intake air is caused to move in the protection tube to be capable of cooling the condensation units and, after colling the condensation units, it can be discharged to the outside of the protection tube.

24. The condensation device for compressed air according to claim 20, wherein a plurality of tubular condensation units having the same length are adjacently disposed in an upright condition inside the protection tube to enable the compressed air in the condensation units to move in one direction.

25. The condensation device for compressed air according to claim 20, wherein the protection tube is disposed in an upright condition on a base plate.
